# EUROPÄISCHE PATENTSCHRIFT

(11) **EP 1 610 422 B1**
(45) Veröffentlichungstag und Bekanntmachung des Hinweises auf die Patenterteilung: **10.01.2007**
(21) Anmeldenummer: 05006071.4
(22) Anmeldetag: 19.03.2005
(51) Int. Cl.: H01R 13/717, H01R 24/10, H01H 9/18

(54) **Elektrische Steckvorrichtung**
Electrical connecting device
Dispositif de connexion électrique

(30) Priorität: 12.06.2004 DE 102004028546; 23.12.2004 DE 102004062039
(43) Veröffentlichungstag der Anmeldung: 28.12.2005
(73) Patentinhaber: Albrecht Jung GmbH & Co. KG, 58579 Schalksmühle (DE)
(72) Erfinder: Soleinsky, Stefan, 85866 Kierspe (DE)

(56) Entgegenhaltungen:
- DE-A1- 3 410 344
- DE-B3- 10 246 399
- DE-U- 1 980 277
- DE-U1- 20 311 185
- FR-A- 2 658 027
- US-A- 3 739 226
- US-A1- 2001 046 130

## Beschreibung

Die vorliegende Erfindung geht von einer gemäß Oberbegriff des Hauptanspruches konzipierten elektrischen Steckvorrichtung, insbesondere Schutzkontaktsteckdose der Gebäudesystemtechnik aus.

Derartige elektrische Steckvorrichtungen sind in der Regel dafür vorgesehen, nach Bedarf über einen entsprechend ausgebildeten Stecker und gegebenenfalls eine daran angeschlossene elektrische Leitung eine leicht wieder trennbare elektrisch leitende Verbindung zu einem Verbraucher herzustellen. Gegebenenfalls sind solche Steckvorrichtungen zur Signalisierung mit einer Beleuchtungseinrichtung ausgerüstet.

Eine dem Oberbegriff des Hauptanspruches entsprechende elektrische Steckvorrichtung ist durch die DE 38 28 177 C2 bekannt geworden. Diese elektrische Schutzkontaktsteckdose ist mit einem, die zur Kontaktierung des Steckerteils und der anzuschließenden elektrischen Kabel notwendigen Kontaktteile aufweisenden Sockelteil versehen, an welchem ein Steckdosenzentralstück befestigbar ist. Außerdem ist die elektrische Schutzkontaktsteckdose mit einer Beleuchtungseinrichtung ausgerüstet. Bei einer derartigen Ausgestaltung ist für die Unterbringung der Beleuchtungseinrichtung jedoch einerseits ein beachtlicher Raum zu deren Unterbringung vorzusehen, und andererseits ist die Montage einer solchen Beleuchtungseinrichtung entsprechend aufwendig.

Zudem ist durch die DE 102 46 399 B3 eine Beschriftungsfeldbeleuchtung eines einen Gerätedeckel und einen Geräteeinsatz aufweisenden elektrischen Installationsgerätes bekannt geworden, was zur Aufputzmontage vorgesehen ist. Längs einer Seitenkante des Gerätedeckels erstreckt sich ein aus einer Schriftfeldkammer mit darin eingelegter Elektrolumineszensfolie bestehendes, beleuchtetes Schriftfeld. Ein Einschubkanal in den ein Lichtleitelement zu seiner Festlegung senkrecht zur Einsteckrichtung eines Steckers verlaufend einzuschieben ist, ist bei diesem elektrischen Installationsgerät nicht vorgesehen, vielmehr wird die Elektrolumineszensfolie lediglich von einem Abdeckschild abgedeckt.

Außerdem ist durch die DE 19 80 277 U ein Wipphebel- oder Drucktastenschalter bekannt geworden, bei dem eine in einem Isolierstoffgehäuse angeordnete Lampe unterhalb des flanschartigen Rahmens an der Seitenwand des Schaltergehäuses mittels einer, an das Lampengehäuse angeformten Linse in ein Fenster des flanschartigen Rahmens eingesetzt und durch angeformte, elastische, harkenförmige Ansätze die Nocken an dem Schaltergehäuse hintergreifen, gehalten ist. Bei einer derartigen Ausgestaltung ist für die Unterbringung der Beleuchtungseinrichtung jedoch einerseits ein beachtlicher Raum zu deren Unterbringung vorzusehen, und andererseits ist die Montage einer solchen Beleuchtungseinrichtung entsprechend aufwendig, weil der komplette Schalter dazu aus seiner Gerätewand entfernt werden muss.

Des weiteren ist durch die US 2001/046 130 A1 eine zur Aufputzmontage vorgesehene Steckvorrichtung mit einer Beleuchtungseinrichtung bekannt geworden, die ihr Licht über mehrere, an den Rahmen angeformte Lichtleitelemente punktuell nach unten abstrahlt. Es sind somit jedoch nur Lichtleitelemente vorgesehen, deren Austausch nicht möglich ist. Bei einem Defekt eines Lichtleitelementes muss aus diesem Grunde der komplette Rahmen der Steckvorrichtung ausgetauscht werden, was entsprechend aufwändig ist.

Zudem ist durch die FR-A-2 658 027 ein Display und eine Abdeckung für ein elektrisches Installationsgerät bekannt geworden, in welche bzw. in welches eine Beleuchtungseinrichtung integriert ist. Das Display mit Rahmen und Beleuchtungseinrichtung stellt jedoch insgesamt einen komplex aufgebauten, aufwändig zu montierenden Gegenstand dar.

Außerdem ist durch die DE 34 10 344 A1 ein beleuchtetes elektrisches Installationsgerät bekannt geworden. Um das Installationsgerät mit verschiedenen Beleuchtungssystemen ausrüsten zu können, weist die Abdeckung ein etwa punktförmiges Lichtaustrittsfenster und ein großflächiges Lichtaustrittsfenster, insbesondere Beschriftungsfeld, auf, wobei in die Ausnehmung des Installationsgerätesockels wahlweise ein das Lichtaustrittsfenster punktförmig ausleuchtender Lampenanhänger oder ein das Lichtaustrittsfenster großflächig ausleuchtender Lampenanhänger einsetzbar ist, dessen Fassung zwecks Überbrückung des Abstandes zwischen dem Installationsgerätesockel und dem Lichtaustrittsfenster vom Einsteckfuß getrennt ist und über einen Arm einstückig mit dem Einsteckfuß verbunden ist. Auch bei diesem Installationsgerät ist ein Einschubkanal in den ein Lichtleitelement zu seiner Festlegung senkrecht zur Einsteckrichtung eines Steckers verlaufend einzuschieben ist, nicht vorgesehen. Zudem ist der Aufbau und die Montage vergleichsweise aufwendig.

Des weiteren ist durch die US-A-3 739 226 eine beleuchtete elektrische Steckvorrichtung bekannt geworden. Die zur Ausleuchtung notwendigen Elemente sind in einer Baugruppe zusammengefasst, welche von einem großen frontseitigen Fenster der Abdeckplatte aufgenommen ist. Diese Baugruppe benötigt nicht nur einen beachtlichen Bauraum, sondern sie baut auch frontseitig beachtlich auf die Abdeckplatte auf. Ein Einschubkanal in den ein Lichtleitelement zu seiner Festlegung senkrecht zur Einsteckrichtung eines Steckers verlaufend einzuschieben ist, ist bei diesem elektrischen Installationsgerät nicht vorgesehen.

Zudem ist durch die DE 203 11 185 U1 ein Nachtlicht bekannt geworden. Das Nachtlicht besteht aus einem Gehäuse mit einem ersten Abschnitt, in dem eine lichtaussendende Einrichtung angeordnet ist und aus einem zweiten Abschnitt, in dem ein Netzstecker und eine Netzsteckdose angeordnet sind, deren elektrische Kontakte über elektrische Leiter entsprechend verbunden sind. Im ersten Abschnitt ist eine lichtaussendende Einrichtung in Form einer nach dem Elektrolumineszensprinzip arbeitende, leuchtende Folie vorgesehen. Ein auswechselbares Lichtleitelement ist bei diesem Nachtlicht nicht vorgesehen.

Der vorliegenden Erfindung liegt deshalb die Aufgabe zugrunde, eine elektrische Steckvorrichtung zu schaffen, deren Beleuchtungseinrichtung bei besonders einfacher Montage platzsparend untergebracht werden kann und die es ermöglicht, bei Bedarf den Austausch von defekten Bauteilen, wie z.B. Lichtleiter, Leuchtmittel usw. schnell auf besonders einfache Art und Weise zu ermöglichen.

Diese Aufgabe wird durch die in den beiden Hauptansprüchen angegebenen Merkmale gelöst.

Bei einer solchermaßen ausgebildeten elektrischen Steckvorrichtung ist besonders vorteilhaft, dass die Beleuchtungseinrichtung nicht nur eine punktuelle, sondern je nach Bedarf eine flächige Lichtsignalisierung über das zugehörige, entsprechend ausgebildete Lichtleitelement ermöglicht. Weiterhin ist besonders vorteilhaft, dass bei Bedarf ein Austausch von defekten Bauteilen (Lichtleitelement, Leuchtmittel usw.) der Beleuchtungseinrichtung auf besonders einfache Art und Weise möglich ist. Bei einer Ausführung gemäß Patentanspruch 3 ist dies Vorteilhafterweise sogar ohne die Verwendung von speziellen Werkzeugen möglich.

Zudem ist besonders vorteilhaft, die Beleuchtungseinrichtung gemäß Patentanspruch 17 als Montagemodul auszubilden, so dass je nach Bedarf auf einfache Art und Weise elektrische Steckvorrichtungen, ohne bauliche Veränderungen vornehmen zu müssen, mit einer derartigen Beleuchtungseinrichtung ausgerüstet werden können.

Weitere vorteilhafte Ausgestaltungen sind in den übrigen Unteransprüchen angegeben. Anhand von fünf in den Zeichnungen näher dargestellter Ausführungsbeispiele sei der erfindungsgemäße Gegenstand näher erläutert. Dabei zeigen:
- Fig. 1:: prinziphaft ein erstes Ausführungsbeispiel einer solchen elektrischen Steckvorrichtung in Explosionsdarstellung;
- Fig. 2:: prinziphaft ein zweites Ausführungsbeispiel einer solchen elektrischen Steckvorrichtung in Explosionsdarstellung;
- Fig. 3:: prinziphaft ein drittes Ausführungsbeispiel einer solchen elektrischen Steckvorrichtung in Explosionsdarstellung;
- Fig. 4:: prinziphaft ein viertes Ausführungsbeispiel einer solchen elektrischen Steckvorrichtung in Explosionsdarstellung;
- Fig. 5:: prinziphaft ein fünftes Ausführungsbeispiel einer solchen elektrischen Steckvorrichtung in Explosionsdarstellung.

Wie aus den Zeichnungen hervorgeht, besteht eine solche, als Schutzkontaktsteckdose ausgebildete elektrische Steckvorrichtung hauptsächlich aus einem Sockelteil 1, einem am Sockelteil 1 festlegbaren Steckdosenzentralstück 2 und einer Beleuchtungseinrichtung.

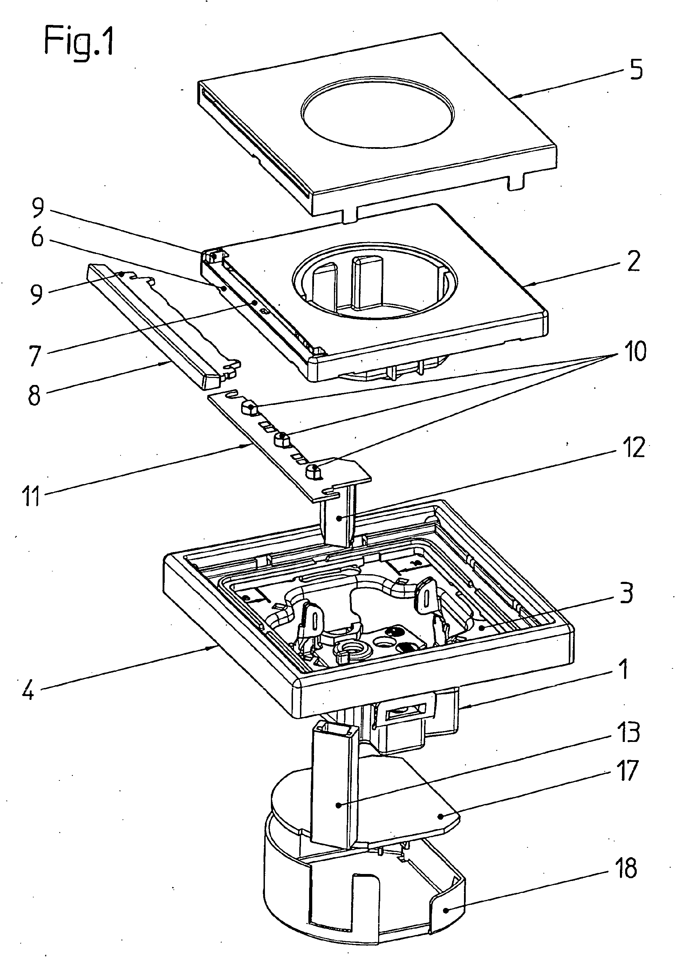

Wie insbesondere aus den Figuren 1 bis 3 hervorgeht, weist das mit den zur Kontaktierung notwendigen Kontaktteilen bestückte Sockelteil 1 einen Tragring 3 auf. Unter Zwischenschaltung des Steckdosenzentralstückes 2 ist ein Abdeckrahmen 4 am Tragring 3 festlegbar. Gegebenenfalls kann an dem Steckdosenzentralstück 2 ein Verkleidungsteil 5 festgelegt werden. Das Steckdosenzentralstück 2 weist an einem seiner vier Kantenbereiche 6 einen Einschubkanal 7 auf. Der Einschubkanal 7 erstreckt sich dabei quasi über die gesamte Länge des einen äußeren Kantenbereiches 6, so dass ein entsprechend groß dimensioniertes Lichtleitelement 8 der Beleuchtungseinrichtung einfach in das Steckdosenzentralstück 2 eingeschoben werden kann. Zur Befestigung sind sowohl an das Lichtleitelement 8 als auch an das Steckdosenzentralstück 2 im Bereich des Einschubkanals 7 miteinander in Wirkverbindung kommende Halteelemente 9 angeformt. Die Halteelemente 9 am Lichtleitelement 8 sind dabei als Rastnuten und die an das Steckdosenzentralstück 2 angeformten Halteelemente 9 als federelastisch auslenkbare Rasthaken ausgebildet. Selbstverständlich können bei Bedarf dem Steckdosenzentralstück 2 auch mehrere, entsprechend dimensionierte Lichtleitelemente 8 über den Einschubkanal 7 bzw. über mehrere Einschubkanäle zugeführt werden. Somit ist auch die Abgabe verschiedener Signale über mehrere Lichtleitelemente der Beleuchtungseinrichtung auf einfache Art und Weise möglich. Selbstverständlich kann bei Bedarf auch ein Einschubkanal 7 dem Kantenbereich des Steckertopfes des Steckdosenzentralstückes 2 zugeordnet sein.

Wie insbesondere aus Figur 1 hervorgeht, besteht die Beleuchtungseinrichtung des Weiteren im Wesentlichen aus drei als LED ausgebildeten Leuchtmitteln 10, die auf einer Leiterplatte 11 angeordnet sind. Die Leiterplatte 11 ist mit einem Steckerteil 12 versehen, welches in ein dem Sockelteil 1 zuzuordnendes, an einer Platine 17 festgelegtes Kupplungsteil 13 eingesteckt werden kann. Über diese Steckverbinderanordnung (Steckerteil 12 und Kupplungsteil 13) wird auf einfache Art und Weise die notwendige elektrische und mechanische Verbindung der Beleuchtungseinrichtung zum Sockelteil 1 bzw. dessen zugeordneter Platine 17 hergestellt. Bei der Montage der elektrischen Steckvorrichtung wird einerseits das Sockelteil 1 mit dem Tragring 3, der Platine 17 und der Schutzkappe 18 bestückt. So ausgerüstet stellt das Sockelteil 1 die erste Baugruppe der elektrischen Steckvorrichtung dar. Andererseits wird die mit den Leuchtmitteln 10 bestückte Leiterplatte 11 über entsprechende Haltemittel positionsgenau an der Unterseite des Steckdosenzentralstück 2 festgelegt. Anschließend wird das Lichtleitelement 8 in den Einschubkanal 7 eingeführt und dabei positionssicher über die Halteelemente 9 im Steckdosenzentralstück 2 fixiert, so dass eine positionsgerechte Zuordnung der Leuchtmittel 10 in Bezug auf das Lichtleitelement 8 und eine sichere Halterung der Leiterplatte 11 auf einfache und platzsparende Art und Weise realisiert ist. So ausgerüstet stellt das Steckdosenzentralstück 2 die zweite Baugruppe der elektrischen Steckvorrichtung dar. Zur Komplettierung der elektrischen Steckvorrichtung am Einbauort wird dann unter Zwischenschaltung des Abdeckrahmens 4 das Steckdosenzentralstück 2 (zweite Baugruppe) mittels einer Schraube am Sockelteil 1 (erste Baugruppe) befestigt, wobei Steckerteil 12 und Kupplungsteil 13 zur Herstellung der elektrischen Verbindung automatisch ineinander greifen. Zur optimalen Lichtabgabe liegt das Lichtleitelement 8 mit seinem Lichtauskoppelbereich oberhalb des Abdeckrahmens 4. Gegebenenfalls kann bevor das Steckdosenzentralstück 2 mit dem Lichtleitelement 8 bestückt wird, dieses mit dem Verkleidungsteil 5 versehen werden, so dass die zweite Baugruppe dann aus dem Steckdosenzentralstück 2, dem Lichtleitelement 8, der mit den Leuchtmitteln 10 bestückten Leiterplatte 11 und dem Verkleidungsteil 5 besteht.

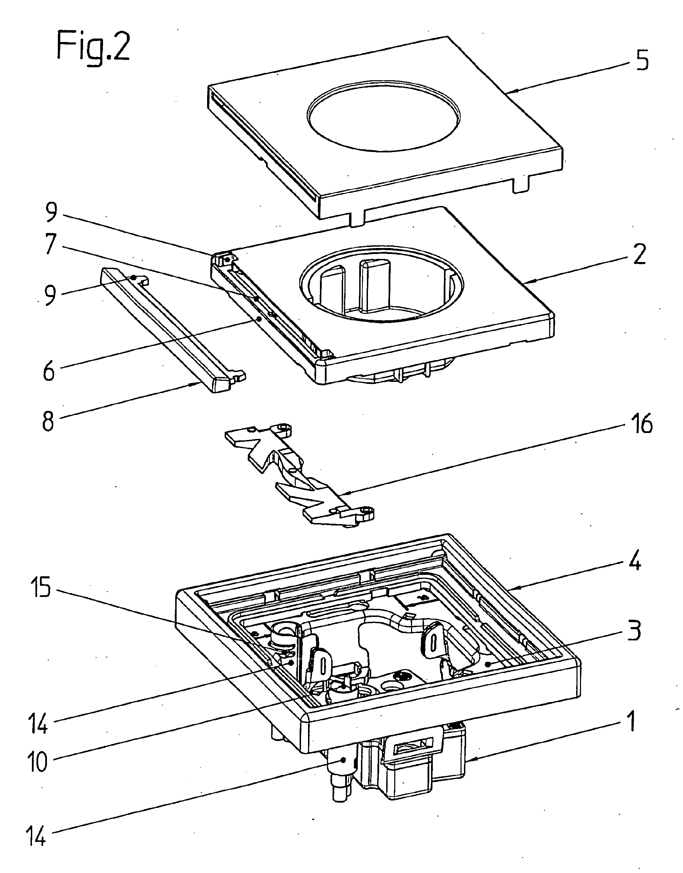

Wie insbesondere aus Figur 2 hervorgeht, weist die Beleuchtungseinrichtung weiterhin im Wesentlichen zwei jeweils von einem Leuchtmittelsockel 14 aufgenommene, als Glimmlampen ausgebildete Leuchtmittel 10 auf. Über ihren Leuchtmittelsockel 14 werden die beiden Glimmlampen zur elektrischen Kontaktierung jeweils direkt in entsprechende Aufnahmen des Sockelteiles 1 eingesteckt. Außerdem sind an dem Tragring 3 zwei Halteklammern 15 angeformt, welche eine sichere mechanische Fixierung der beiden Glimmlampen bzw. der beiden Leuchtmittelsockel 14 gewährleisten. Über die Leuchtmittelsockel 14 wird auf einfache Art und Weise die notwendige elektrische und mechanische Verbindung der Beleuchtungseinrichtung zum Sockelteil 1 bzw. Tragring 3 hergestellt. Um das von den Glimmlampen abgegebene Licht quasi verlustfrei zu dem im Einschubkanal 7 gehaltenen Lichtleitelement 8 zu führen, ist ein weiterer Lichtleiter 16 vorgesehen, der einerseits den beiden Leuchtmitteln 10 und andererseits dem Lichtleitelement 8 zugeordnet ist. Bei der Montage der elektrischen Steckvorrichtung wird einerseits das Sockelteil 1 mit dem Tragring 3 und den beiden die Leuchtmittel 10 aufweisenden Leuchtmittelsockeln 14 bestückt. So ausgerüstet stellt das Sockelteil 1 die erste Baugruppe der elektrischen Steckvorrichtung dar. Andererseits wird an der Unterseite des Steckdosenzentralstückes 2 über entsprechende Haltemittel ein weiterer Lichtleiter 16 positionsgenau festgelegt. Anschließend wird das Lichtleitelement 8 in den Einschubkanal 7 eingeführt und dabei positionssicher über die Halteelemente 9 im Steckdosenzentralstück 2 fixiert, so dass eine positionsgerechte Zuordnung des weiteren Lichtleiters 16 in Bezug auf das Lichtleitelement 8 und deren sichere Halterung auf einfache und platzsparende Art und Weise realisiert ist. So ausgerüstet stellt das Steckdosenzentralstück 2 die zweite Baugruppe der elektrischen Steckvorrichtung dar. Zur Komplettierung der elektrischen Steckvorrichtung am Einbauort wird dann unter Zwischenschaltung des Abdeckrahmens 4 das Steckdosenzentralstück 2 (zweite Baugruppe) mittels einer Schraube am Sockelteil 1 (erste Baugruppe) befestigt, wobei der weitere Lichtleiter 16 zur Herstellung der notwendigen optischen Verbindung automatisch den beiden Leuchtmitteln 10 bzw. Leuchtmittelsockel 14 positionsgerecht zugeordnet wird. Zur optimalen Lichtabgabe liegt das Lichtleitelement 8 mit seinem Lichtauskoppelbereich oberhalb des Abdeckrahmens 4. Gegebenenfalls kann bevor das Steckdosenzentralstück 2 mit dem Lichtleitelement 8 bestückt wird, dieses mit dem Verkleidungsteil 5 versehen werden, so dass die zweite Baugruppe dann aus dem Steckdosenzentralstück 2, dem Lichtleitelement 8, dem weiteren Lichtleiter 16 und dem Verkleidungsteil 5 besteht.

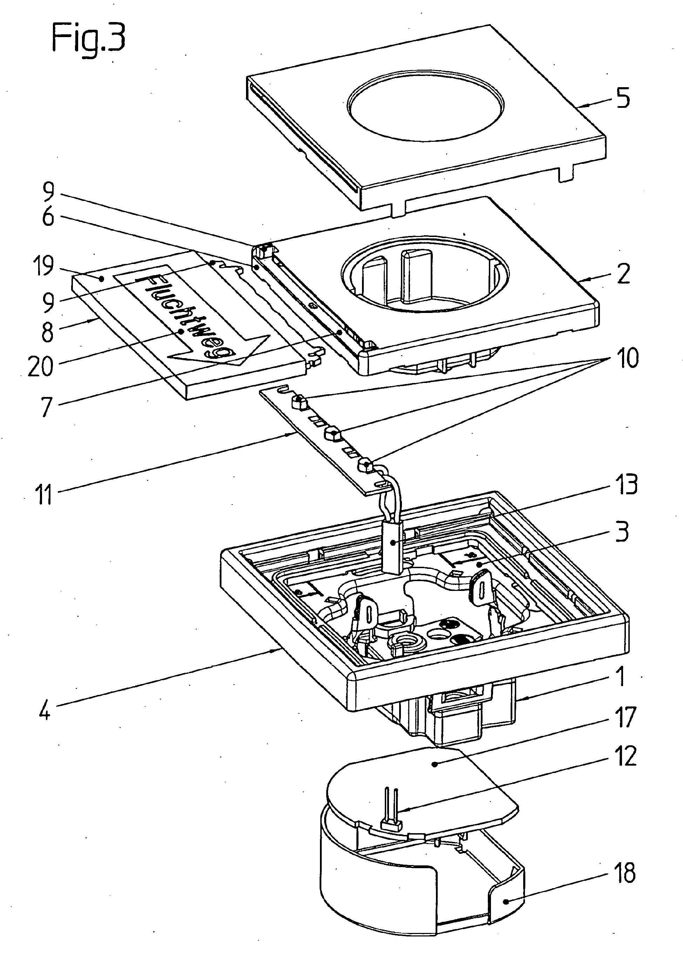

Wie insbesondere aus Figur 3 hervorgeht, besteht die Beleuchtungseinrichtung des Weiteren im Wesentlichen aus drei als LED ausgebildeten Leuchtmitteln 10, die auf einer Leiterplatte 11 angeordnet sind. Die Leiterplatte 11 steht mit zwei in ein Kupplungsteil 13 mündenden Leitungen in Verbindung, welches in ein auf der Platine 17 vorhandenes Steckerteil 12 eingesteckt werden kann. Über diese Steckverbinderanordnung (Steckerteil 12 und Kupplungsteil 13) wird auf einfache Art und Weise die notwendige elektrische Verbindung der Beleuchtungseinrichtung zum Sockelteil 1 bzw. dessen zugeordneter Platine 17 hergestellt. Bei der Montage der elektrischen Steckvorrichtung wird einerseits das Sockelteil 1 mit dem Tragring 3, der Platine 17 und der Schutzkappe 18 bestückt. So ausgerüstet stellt das Sockelteil 1 die erste Baugruppe der elektrischen Steckvorrichtung dar. Andererseits wird die mit den Leuchtmitteln 10 bestückte Leiterplatte 11 über entsprechende Haltemittel positionsgenau an der Unterseite des Steckdosenzentralstück 2 festgelegt. Anschließend wird das Lichtleitelement 8 in den Einschubkanal 7 eingeführt und dabei positionssicher über die Halteelemente 9 im Steckdosenzentralstück 2 fixiert, so dass eine positionsgerechte Zuordnung der Leuchtmittel 10 in Bezug auf das Lichtleitelement 8 und eine sichere Halterung der Leiterplatte 11 auf einfache und platzsparende Art und Weise realisiert ist. So ausgerüstet stellt das Steckdosenzentralstück 2 die zweite Baugruppe der elektrischen Steckvorrichtung dar. Zur Komplettierung der elektrischen Steckvorrichtung am Einbauort wird dann unter Zwischenschaltung des Abdeckrahmens 4 zuerst die Steckverbinderanordnung (Steckerteil 12 und Kupplungsteil 13) zusammengeführt, dann wird das Steckdosenzentralstück 2 (zweite Baugruppe) mittels einer Schraube am Sockelteil 1 (erste Baugruppe) befestigt. Zur optimalen Lichtabgabe liegt das Lichtleitelement 8 mit seinem Lichtauskoppelbereich oberhalb des Abdeckrahmens 4. Gegebenenfalls kann bevor das Steckdosenzentralstück 2 mit dem Lichtleitelement 8 bestückt wird, dieses mit dem Verkleidungsteil 5 versehen werden, so dass die zweite Baugruppe dann aus dem Steckdosenzentralstück 2, dem Lichtleitelement 8, der mit den Leuchtmitteln 10 bestückten Leiterplatte 11 und dem Verkleidungsteil 5 besteht.

Wie des Weiteren aus Fig. 3 hervorgeht, weist das Lichtleitelement 8 eine große Lichtauskoppelfläche 19 auf, die gegebenenfalls zur Signalisierung mit einem Piktogramm 20 versehen ist.

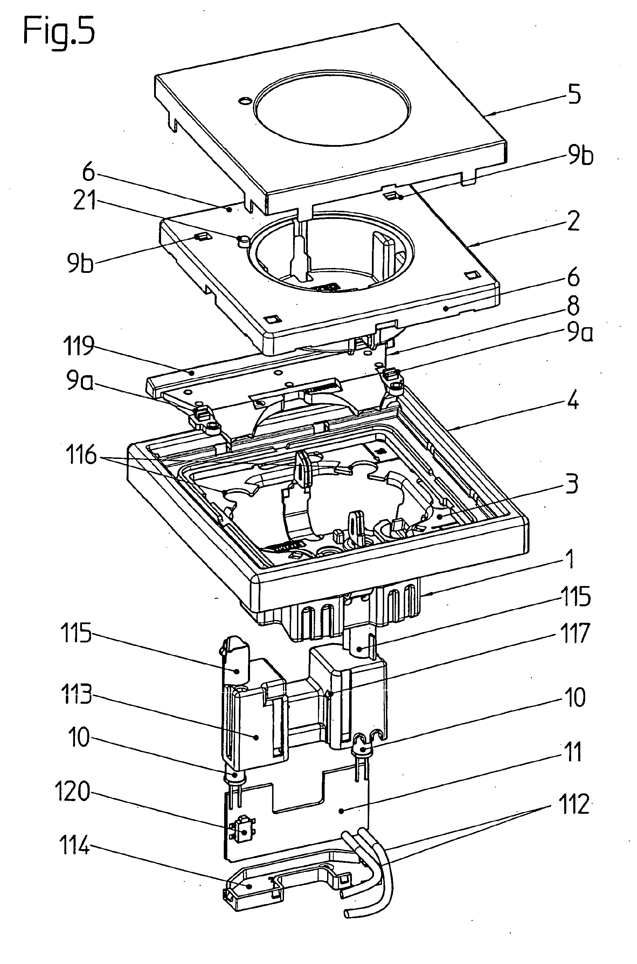

Wie insbesondere aus den Figuren 5 und 6 hervorgeht, weist das mit den zur Kontaktierung notwendigen Kontaktteilen bestückte Sockelteil 1 einen Tragring 3 auf. Unter Zwischenschaltung des Steckdosenzentralstückes 2 ist ein Abdeckrahmen 4 am Tragring 3 festlegbar. Gegebenenfalls kann an dem Steckdosenzentralstück 2 ein Verkleidungsteil 5 festgelegt werden. Das Steckdosenzentralstück 2 weist an einem seiner vier Kantenbereiche 6 eine Aussparung 7a auf. Die Aussparung 7a erstreckt sich dabei quasi über die gesamte Länge des einen äußeren Kantenbereiches 6, so dass ein entsprechend groß dimensioniertes Lichtleitelement 8 der Beleuchtungseinrichtung einfach am Steckdosenzentralstück 2 festgelegt werden kann. Zur Befestigung sind an das Lichtleitelement 8 zwei als Rasthaken ausgebildete Halteelemente 9a angeformt, die kraft- und formschlüssig in als rechteckige Öffnungen ausgebildete Haltemittel 9b des Steckdosenzentralstücks 2 eingreifen. Die als rechteckige Öffnungen ausgeführten Haltemittel 9b sind dabei in die Hauptfläche des Steckdosenzentralstücks 2 eingeformt. Selbstverständlich können bei Bedarf am Steckdosenzentralstück 2 auch mehrere, entsprechend groß dimensionierte Lichtleitelemente 8 angebracht werden. Die Lichtleitelemente 8 können dabei entweder einer einzigen Aussparung 7a oder aber auch mehreren Aussparungen 7a des Steckdosenzentralstückes 2 zugeordnet sein. Somit ist auch die Abgabe verschiedener Signale über mehrere Lichtleitelemente 8 der Beleuchtungseinrichtung auf einfache Art und Weise möglich. Selbstverständlich kann bei Bedarf auch eine Aussparung 7a dem Kantenbereich des Steckertopfes des Steckdosenzentralstückes 2 zugeordnet sein.

Durch die als Rasthaken ausgebildeten Halteelemente 9a kann das Lichtleitelement 8 besonders einfach wieder aus den Haltemitteln 9b des Steckdosenzentralstückes 2 entfernt werden. Ein Wechsel von Lichtleitelementen 8, die in Form, Farbe, Größe usw. unterschiedlich ausgeführt sein können, ist somit ohne weiteres nachträglich möglich.

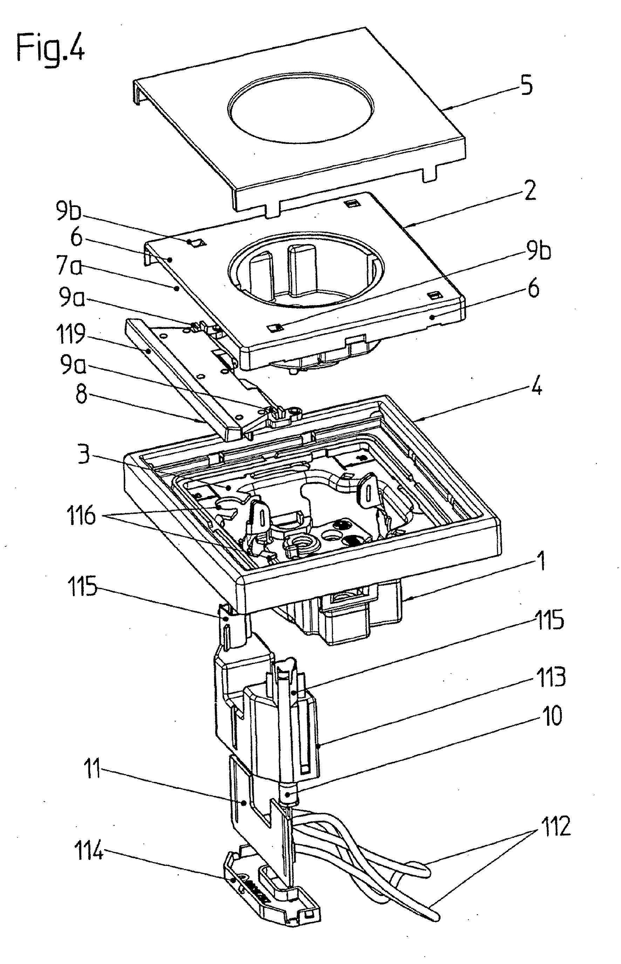

Wie insbesondere aus Figur 4 hervorgeht, besteht die Beleuchtungseinrichtung im Wesentlichen aus zwei als LED ausgebildeten Leuchtmitteln 10, die auf einer Leiterplatte 11 angeordnet sind. Die Leiterplatte 11 ist mit Anschlusskabeln 112 versehen, um auf einfache Art und Weise eine Verbindung mit der zum Betrieb notwendigen Versorgungsspannung herstellen zu können. Zusammen mit der Leiterplatte 11 sind die beiden, als LED ausgebildeten Leuchtmittel 10 von einer Gehäuseanordnung aufgenommen. Die Gehäuseanordnung besteht aus einem Grundgehäuse 113 und einem Gehäusedeckel 114. Senkrecht wird die Leiterplatte 11 in den Innenraum des Grundgehäuses 113 eingeschoben, wobei die beiden Leuchtmittel 10 letztendlich von entsprechend ausgeführten, an das Grundgehäuse 113 einstückig angeformten Leuchtmitteldomen 115 schützend aufgenommen sind. Das Grundgehäuse 113 wird anschließend mit dem Gehäusedeckel 114 verschlossen. Die beiden Leuchtmittel 10, die Leiterplatte 11 und die Gehäuseanordnung bilden somit ein Montagemodul, welches je nach Bedarf einer elektrischen Steckvorrichtung zugeordnet werden kann. Über die aus dem Grundgehäuse 113 herausgeführten Anschlusskabel 112 kann das Montagemodul schnell und einfach an die zum Betrieb notwendige Versorgungsspannung angeschlossen werden. Um das Montagemodul selbst schnell und einfach lagegerecht dem Lichtleitelement 8 zuordnen zu können, bzw. positionsgenau und sicher festzulegen, weist der Tragring 3 zwei eingeformte Halteöffnungen 116 auf, hinter die die beiden Leuchtmitteldome 115 mit ihren angeformten Rastnasen kraft- und formschlüssig einrasten. Zum selben Zweck, sind an die beiden Schmalseiten des Grundgehäuses 113 Rastelemente 17 angeformt, die mit an das Sockelteil 1 angeformten, korrespondierenden Rastmitteln in Wirkverbindung kommen. Damit sind die beiden Leuchtmittel 10 optimal dem Lichteinkoppelbereich des Lichtleitelementes 8 zugeordnet und das Montagemodul auf sichere Art und Weise positionsgenau gehalten. Das eingekoppelte Licht wird über den sich längs über einen kompletten Kantenbereich 6 des Steckdosenzentralstückes 2 erstreckenden Lichtauskoppelbereich 119 des Lichtleitelementes 8 abgegeben.

Eine solche elektrische Steckvorrichtung besteht also lediglich aus zwei vormontierten Baugruppen, die unter Zwischenschaltung des Abdeckrahmens 4 vor Ort schnell und einfach installiert werden können. Die erste Baugruppe bildet dabei das Steckdosenzentralstück 2 mit dem daran festgelegten Lichtleitelement 8 gegebenenfalls ergänzt durch das Verkleidungsteil 5. Die zweite Baugruppe ist durch das Sockelteil 1, den Tragring 3 und das daran festlegbare Montagemodul der Beleuchtungseinrichtung gebildet. Nach dem Anschluss an die Versorgungsspannung und festsetzen des Sockelteils 1 in der Installationsdose kann die erste Baugruppe über eine Schraube unter Zwischenschaltung des Abdeckrahmens 4 einfach am mit dem Montagemodul ausgerüsteten Sockelteil 1 befestigt werden. Zur optimalen Lichtabgabe kommt das Lichtleitelement 8 mit seinem Lichtauskoppelbereich 119 nach der Installation oberhalb des Abdeckrahmens 4 zu liegen.

Wie insbesondere aus Figur 5 hervorgeht, weist die dort dargestellte elektrische Steckvorrichtung im Prinzip den gleichen Aufbau wie die unter Figur 1 dargestellte elektrische Steckvorrichtung auf. Es erübrigt sich somit ein eingehen auf diese Gegebenheiten. Zusätzlich ist jedoch beim zweiten Ausführungsbeispiel einer solchen elektrischen Steckvorrichtung ein elektrischer Schalter 120 vorgesehen. Der elektrische Schalter 120 ist an der Leiterplatte 11 der Beleuchtungseinrichtung festgelegt und kann mittels einer dem Grundgehäuse 113 zugeordneten Mechanik betätigt werden, welche wiederum mit einem aus der Hauptfläche des Steckdosenzentralstücks 2 bzw. des Verkleidungsteils 5 hervorstehenden Betätigungsstößel 21 in Wirkverbindung steht. Der elektrische Schalter 120 ist mit der Beleuchtungseinrichtung verschaltet, so dass die Beleuchtungseinrichtung je nach Bedarf ein- bzw. ausgeschaltet werden kann.

Selbstverständlich kann das Lichtleitelement 8 auch einen wesentlich größeren als dargestellten Lichtauskoppelbereich 119 aufweisen, um gegebenenfalls zur Signalisierung mit einem notwendigen Piktogramm versehen werden zu können.

Auf einfache Art und Weise ist somit eine Beleuchtungseinrichtung für eine elektrische Steckvorrichtung realisiert, welche bei besonders einfacher Montage platzsparend untergebracht ist. Zudem ist der bei Bedarf notwendig werdende Austausch von defekten Bauteilen, wie z. B. Lichtleitelement 8, Leuchtmittel 10 usw. durch eine derartige Ausgestaltung auf besonders einfache Art und Weise gegebenenfalls ohne Verwendung von speziellen Werkzeugen möglich.

Durch die verschiedenen Dimensionierungsmöglichkeiten des Lichtleitelementes 8 eignet sich die Beleuchtungseinrichtung einer solchen elektrischen Steckvorrichtung nicht nur zum signalisieren bestimmter Betriebszustände, sondern ist auch besonders geeignet, um auf einfache Art und Weise eine Orientierungsbeleuchtung zu realisieren.

## Patentansprüche

1. Elektrische Steckvorrichtung, insbesondere Schutzkontaktsteckdose mit einem, die zur Kontaktierung der Steckerstifte sowie der elektrischen Kabel notwendigen Kontaktteile aufnehmenden, einen Tragring (3) aufweisenden Sockelteil (1), an welchem ein zur Aufnahme des anzuschließenden Steckers vorgesehenes Steckdosenzentralstück (2) befestigbar ist und welchem eine, zumindest ein Lichtleitelement (8) und zumindest ein Leuchtmittel (10) aufweisende Beleuchtungseinrichtung zugeordnet ist, **dadurch gekennzeichnet, dass** das Steckdosenzentralstück (2) in zumindest einem seiner Kantenbereiche (6) zumindest einen derart angeordneten und ausgebildeten Einschubkanal (7, 7a) aufweist, so dass das zumindest ein zugeordnetes Lichtleitelement (8) zu seiner Festlegung senkrecht zur Einsteckrichtung des Steckers verlaufend in den Einschubkanal (7, 7a) einzuschieben ist.

2. Elektrische Steckvorrichtung nach Anspruch 1, **dadurch gekennzeichnet, dass** an zumindest einem Lichtleitelement (8) der Beleuchtungseinrichtung und am Steckdosenzentralstück (2) miteinander in Wirkverbindung kommende Halteelemente (9) angeformt sind.

3. Elektrische Steckvorrichtung nach Anspruch 1 oder 2, **dadurch gekennzeichnet, dass** an der Hauptfläche des Steckdösenzentralstücks (2) zumindest ein, mit einem entsprechend ausgebildeten Halteelement (9a) des Lichtleitelementes (8) in Wirkverbindung kommendes Haltemittel (9b) vorhanden ist.

4. Elektrische Steckvorrichtung nach einem der Ansprüche 1 bis 3, **dadurch gekennzeichnet, dass** die Beleuchtungseinrichtung zumindest ein als LED ausgebildetes Leuchtmittel (10) aufweist.

5. Elektrische Steckvorrichtung nach einem der Ansprüche 1 bis 4, **dadurch gekennzeichnet, dass** die Beleuchtungseinrichtung zumindest ein als Glimmlampe ausgebildetes Leuchtmittel (10) aufweist.

6. Elektrische Steckvorrichtung nach einem der Ansprüche 1 bis 5, **dadurch gekennzeichnet, dass** zumindest ein Leuchtmittel (10) der Beleuchtungseinrichtung auf einer Leiterplatte (11) angeordnet ist.

7. Elektrische Steckvorrichtung nach einem der Ansprüche 1 bis 6, **dadurch gekennzeichnet, dass** zumindest ein Leuchtmittel (10) der Beleuchtungseinrichtung innerhalb eines Leuchtmittelsockels (14) aufgenommen ist.

8. Elektrische Steckvorrichtung nach einem der Ansprüche 1 bis 7, **dadurch gekennzeichnet, dass** die Beleuchtungseinrichtung über eine Steckverbinderanordnung mit dem Sockelteil (1) in Verbindung steht.

9. Elektrische Steckvorrichtung nach einem der Ansprüche 1 bis 8, **dadurch gekennzeichnet, dass** die Beleuchtungseinrichtung mit einer dem Sockelteil (1) zugeordneten Platine (17) in Verbindung steht.

10. Elektrische Steckvorrichtung nach einem der Ansprüche 1 bis 9, **dadurch gekennzeichnet, dass** die Beleuchtungseinrichtung über ein flexibles Anschlusskabel mit dem Sockelteil (1) in Verbindung steht.

11. Elektrische Steckvorrichtung nach einem der Ansprüche 1 bis 10, **dadurch gekennzeichnet, dass** zumindest ein Einschubkanal (7, 7a) einem Außenkantenbereich des Steckdosenzentralstückes (2) zugeordnet ist.

12. Elektrische Steckvorrichtung nach einem der Ansprüche 1 bis 11, **dadurch gekennzeichnet, dass** zumindest ein Einschubkanal (7, 7a) einem dem Steckertopf zugehörigen Kantenbereich des Steckdosenzentralstückes (2) zugeordnet ist.

13. Elektrische Steckvorrichtung nach einem der Ansprüche 1 bis 12, **dadurch gekennzeichnet, dass** zumindest ein Haltemittel (9b) des Steckdosenzentralstücks (2) als Ausnehmung ausgebildet ist.

14. Elektrische Steckvorrichtung nach einem der Ansprüche 1 bis 13, **dadurch gekennzeichnet, dass** zumindest ein Leuchtmittel (10) der Beleuchtungseinrichtung von einer Gehäuseanordnung aufgenommen ist.

15. Elektrische Steckvorrichtung nach einem der Ansprüche 1 bis 14, **dadurch gekennzeichnet, dass** zumindest ein Leuchtmittel (10), eine Leiterplatte (11) und die Gehäuseanordnung zu einem separat an die Versorgungsspannung anschließbaren Montagemodul zusammengefasst sind.

16. Elektrische Steckvorrichtung nach einem der Ansprüche 1 bis 15, **dadurch gekennzeichnet, dass** der Tragring (3) zumindest ein an entsprechender Stelle mit der Gehäuseanordnung in Wirkverbindung kommendes Befestigungsmittel (116) aufweist.

17. Elektrische Steckvorrichtung nach einem der Ansprüche 1 bis 16, **dadurch gekennzeichnet, dass** der Beleuchtungseinrichtung ein Schalter (120) zugeordnet ist.

## Claims

1. Electrical plug-and-socket device, in particular a socket outlet with earthing contact, with a base constituent (1) which features a retaining ring (3) and holds the contacts for contacting the plug pins and the electric cables, and to which a socket-outlet central part (2) can be fastened for the purpose of accommodating the plug to be connected, and to which a lighting facility is allocated that features at least one light guiding element (8) and at least one illuminant, **characterised by the fact** that in at least one of its boundary zones the socket-outlet central part (2) features at least one insertion channel (7, 7a) that is designed and arranged in such a manner that the at least one allocated light guiding element (8) has to be inserted into the insertion channel (7, 7a) vertically to the direction of plugging in the plug, for the purpose of localising the same.

2. Electrical plug-and-socket device in accordance with Claim 1, **characterised by the fact** that retaining elements (9) are moulded onto the socket-outlet central part (2) and onto at least one light guiding element (8) of the lighting facility, constituting a mechanical linkage with each other.

3. Electrical plug-and-socket device in accordance with Claim 1 or Claim 2, **characterised by the fact** that at least one retaining element (9b) is provided on the main surface of the socket-outlet central part (2), which forms a mechanical linkage with a correspondingly designed retaining element (9a) of the light guiding element (8).

4. Electrical plug-and-socket device in accordance with any of Claims 1 to 3, **characterised by the fact** that the lighting facility features at least one illuminant (10) designed as an LED.

5. Electrical plug-and-socket device in accordance with any of Claims 1 to 4, **characterised by the fact** that the lighting facility features at least one illuminant (10) designed as a low-voltage neon glow lamp.

6. Electrical plug-and-socket device in accordance with any of Claims 1 to 5, **characterised by the fact** that at least one illuminant (10) of the lighting facility is arranged on a printed-circuit board (11).

7. Electrical plug-and-socket device in accordance with any of Claims 1 to 6, **characterised by the fact** that at least one illuminant (10) of the lighting facility is accommodated in the base of an illuminant (14).

8. Electrical plug-and-socket device in accordance with any of Claims 1 to 7, **characterised by the fact** that the lighting facility communicates with the base constituent (1) by way of a connector arrangement.

9. Electrical plug-and-socket device in accordance with any of Claims 1 to 8, **characterised by the fact** that the lighting facility communicates with a printed circuit board (17) allocated to the base constituent (1).

10. Electrical plug-and-socket device in accordance with any of Claims 1 to 9, **characterised by the fact** that the lighting facility communicates with the base constituent (1) by way of a flexible connecting cable.

11. Electrical plug-and-socket device in accordance with any of Claims 1 to 10, **characterised by the fact** that at least one insertion channel (7, 7a) is allocated to an outer boundary zone of the socket-outlet central part (2).

12. Electrical plug-and-socket device in accordance with any of Claims 1 to 11, **characterised by the fact** that at least one insertion channel (7, 7a) is allocated to a boundary zone of the socket-outlet central part (2) associated with the bowl of the plug.

13. Electrical plug-and-socket device in accordance with any of Claims 1 to 12, **characterised by the fact** that at least one retaining element (9b) of the socket-outlet central part (2) is designed as a recess.

14. Electrical plug-and-socket device in accordance with any of Claims 1 to 13, **characterised by the fact** that at least one illuminant (10) of the lighting facility is accommodated by a housing arrangement.

15. Electrical plug-and-socket device in accordance with any of Claims 1 to 14, **characterised by the fact** that at least one illuminant (10), a printed circuit board (11) and the housing arrangement are put together to form an assembly module that can be separately connected to the supply voltage.

16. Electrical plug-and-socket device in accordance with any of Claims 1 to 15, **characterised by the fact** that the retaining ring (3) features at least one fastening device (116) which forms a mechanical linkage with the housing arrangement at a suitable place.

17. Electrical plug-and-socket device in accordance with any of Claims 1 to 16, **characterised by the fact** that a switch (120) is allocated to the lighting facility.

## Revendications

1. Dispositif de connexion électrique, en particulier prise de courant de sécurité avec une pièce de socle (1) abritant les pièces de contact nécessaires à la mise en contact des broches de connecteur ainsi que du câble électrique et présentant un anneau support (3), sur lequel peut être fixée une pièce centrale de prise de courant (2) prévue pour recevoir le connecteur à brancher et auquel correspond un dispositif d'éclairage présentant au moins un élément à fibre optique (8) et au moins un moyen lumineux (10), **caractérisé en ce que** la pièce centrale de prise de courant (2) présente dans au moins l'une de ses zones d'arête (6) au moins un canal embrochable (7, 7a) disposé et configuré de telle sorte qu'au moins un élément à fibre optique (8) correspondant doit être enfiché dans le canal embrochable (7, 7a) pour sa fixation perpendiculairement au sens d'enfichage du connecteur.

2. Dispositif de connexion électrique selon revendication 1, **caractérisé en ce que** des éléments de retenue (9) fonctionnant en interaction sont formés sur au moins un élément à fibre optique (8) du dispositif d'éclairage et sur la pièce centrale de prise de courant (2).

3. Dispositif de connexion électrique selon revendication 1 ou 2, **caractérisé en ce que** sur la surface principale de la pièce centrale de prise de courant (2), il existe au moins un moyen de retenue (9b) fonctionnant en interaction avec un élément de retenue (9a) configuré en conséquence de l'élément à fibre optique (8).

4. Dispositif de connexion électrique selon l'une des revendications 1 à 3, **caractérisé en ce que** le dispositif d'éclairage présente au moins un moyen lumineux (10) configuré comme une DEL.

5. Dispositif de connexion électrique selon l'une des revendications 1 à 4, **caractérisé en ce que** le dispositif d'éclairage présente au moins un moyen lumineux (10) configuré comme une lampe fluorescente.

6. Dispositif de connexion électrique selon l'une des revendications 1 à 5, **caractérisé en ce qu'**au moins un moyen lumineux (10) du dispositif d'éclairage est monté sur une carte imprimée (11).

7. Dispositif de connexion électrique selon l'une des revendications 1 à 6, **caractérisé en ce qu'**au moins un moyen lumineux (10) du dispositif d'éclairage est logé à l'intérieur d'un socle de moyen lumineux (14).

8. Dispositif de connexion électrique selon l'une des revendications 1 à 7, **caractérisé en ce que** le dispositif d'éclairage est en relation avec la pièce de socle (1) par le truchement d'une configuration à connecteur à fiches.

9. Dispositif de connexion électrique selon l'une des revendications 1 à 8, **caractérisé en ce que** le dispositif d'éclairage est en relation avec une platine (17) affectée à la pièce de socle (1).

10. Dispositif de connexion électrique selon l'une des revendications 1 à 9, **caractérisé en ce que** le dispositif d'éclairage est en relation avec la pièce de socle (1) par le truchement d'un câble de raccordement flexible.

11. Dispositif de connexion électrique selon l'une des revendications 1 à 10, **caractérisé en ce qu'**au moins un canal embrochable (7, 7a) est affecté à une zone d'arête extérieure de la pièce centrale de prise de courant (2).

12. Dispositif de connexion électrique selon l'une des revendications 1 à 11, **caractérisé en ce qu'**au moins un canal embrochable (7, 7a) est affecté à une zone d'arête appartenant à la tête de connecteur de la pièce centrale de prise de courant (2).

13. Dispositif de connexion électrique selon l'une des revendications 1 à 12, **caractérisé en ce qu'**au moins un moyen de retenue (9b) de la pièce centrale de prise de courant (2) est configuré comme un évidement.

14. Dispositif de connexion électrique selon l'une des revendications 1 à 13, **caractérisé en ce qu'**au moins un moyen lumineux (10) du dispositif d'éclairage est logé dans une structure de boîtier.

15. Dispositif de connexion électrique selon l'une des revendications 1 à 14, **caractérisé en ce qu'**au moins un moyen lumineux (10), une carte imprimée (11) et la structure de boîtier sont regroupés pour former un module de montage pouvant être raccordé séparément à la tension d'alimentation.

16. Dispositif de connexion électrique selon l'une des revendications 1 à 15, **caractérisé en ce que** l'anneau support (3) présente au moins un moyen de fixation (116) en interaction avec la structure de boîtier, à l'endroit correspondant.

17. Dispositif de connexion électrique selon l'une des revendications 1 à 16, **caractérisé en ce qu'**un interrupteur (120) est affecté au dispositif d'éclairage.
